# EUROPEAN PATENT SPECIFICATION

(11) **EP 1 994 096 B1**
(45) Date of publication and mention of the grant of the patent: **29.04.2009**
(21) Application number: 07752839.6
(22) Date of filing: 12.03.2007
(51) Int. Cl.: C08L 97/02, C08L 23/06, C08L 1/00

(54) **IMPROVED LUBRICANT COMPOSITION FOR CELLULOSIC-THERMOPLASTIC COMPOSITE**
VERBESSERTE SCHMIERMITTELZUSAMMENSETZUNG FÜR EINE THERMOPLASTISCHE CELLULOSEHALTIGE VERBINDUNG
COMPOSITION LUBRIFIANTE AMÉLIORÉE POUR COMPOSITE CELLULOSIQUE-THERMOPLASTIQUE

(30) Priority: 13.03.2006 US 781331 P; 09.03.2007 US 716220
(43) Date of publication of application: 26.11.2008
(73) Proprietor: CHEMTURA CORPORATION, Middlebury, CT 06749 (US)
(72) Inventor: SIGWORTH, William, D., Naugatuck, CT 06770 (US); ROWLAND, Robert, G., Woodbridge, CT 06525 (US); RICHARDSON, Mark, Cheshire, CT 06410 (US)
(74) Representative: Serravalle, Marco
(86) International application number: PCT/US2007/006168
(87) International publication number: WO 2007/108982

(56) References cited:
- JP-A- 8 302 129
- US-A1- 2003 229 160

## Description

### BACKGROUND OF THE INVENTION

### 1. Field of the Invention

The present invention relates to cellulosic-thermoplastic composites. More particularly, the present invention relates to improved lubricant compositions for cellulosic-thermoplastic composites where the lubricant composition comprises a mixture of at least one saturated fatty acid bis-amide and at least one unsaturated fatty acid bis-amide.

### 2. Description of Related Art

With the increasing scarcity of quality wood lumber, it has become most desirable to seek alternative materials that can substitute for wood. Composite materials prepared from plastics and natural fibers are widely used as such wood substitutes and the use of these composite materials in articles of commerce is increasing rapidly. These composite materials can be used in a variety of products for structural and decorative architectural applications, as well as automotive uses. They may be cut, shaped, sanded, drilled, and fastened in the same manner as natural wood.

Architectural products containing these composite materials prepared from plastics and natural fibers are frequently prepared by extrusion. Such architectural products can be used in both residential and commercial applications, for example, decking, railing, fencing, posts, trim, moldings, siding, shingles, lattice, sills, and jambs. When compared to wood, consumers expect such composite materials to offer greater durability and weather resistance, with lower maintenance. Composite materials prepared from plastics and natural fibers are generally resistant to rot and insect attack.

Maximizing the durability of these composite materials is of critical importance to consumers and producers alike. The materials are generally more costly than natural wood. Furthermore, they are also usually heavier than wood, which is a potential hardship to builders, and presents additional structural issues for architects and engineers. In order to overcome these drawbacks, composite materials should offer superior benefits in terms of durability and low maintenance.

Composite materials prepared from plastics and natural fibers may also be used for the production of articles in automotive applications. A variety of parts have been prepared such as knobs, interior door handles, and decorative interior fascia; as well as concealed parts such as sound-deadening panels, trunk liners, tire covers, bins, and carpet backings. Such parts are frequently pressed or molded.

Other uses for composite materials prepared from plastics and natural fibers include sheeting substitutes for fiberboard, particleboard, and plywood. Composite materials can be used to make miscellaneous small articles such as planters, tubs, pots, and picture frames.

Useful composite materials can be prepared from various plastics, including polyethylene, polypropylene, and co-polyethylene-vinyl acetate. Recycled plastics are frequently used in order to lower cost. High-density polyethylene (HDPE) is particularly well-suited for use in decking, railing, fencing, and similar applications.

Natural fibers are used in the composite materials in order to reduce the cost and weight of the composite material, and to improve the physical properties, particularly stiffness and tensile strength. Natural fibers are superior to synthetic fibers, such as carbon and glass, as the natural fibers are of lower cost. Natural fibers are also preferred over mineral fillers, such as talc and mica, as the natural fibers produce lighter composites. The natural fibers are usually waste products from other processes. Almost any cellulosic particulate can be used, including wood, newspaper, cardboard; straw, agricultural and plant residues, and the like.

A well-known problem in the formation of composite materials prepared from plastics and natural fibers is the incompatibility of the fiber with the plastic. Natural fibers are hydrophilic, with many free polar hydroxyl groups on the surface. Plastics that are normally used with such fibers are generally hydrophobic. Therefore, the plastics do not readily wet the surface of the natural fiber and adhere thereto, which causes a loss of strength in the resulting composite material.

This problem can be overcome by the addition of a coupling agent to the composite material.

Coupling agents are thought to function by the reaction of a reactive anhydride or acid moiety with hydroxyl groups on the surface of the fiber to form an ester linkage. The hydrophobic polymer chains extend outwards from the fiber surface, where they can interact with the bulk of the polymer matrix. The exact nature of the interaction will depend upon the choice of coupling agent and polymer, and the extent of crystallinity of the polymer. The coupling agent generally serves as a transitional bridge that improves the adhesion of the plastic to the natural fiber surface. Improved adhesion can result in improved physical properties for the composite material prepared from plastics and natural fibers, particularly the tensile and flexural strength, resistance to water uptake and creep, and reduction in the linear coefficient of thermal expansion (LCTE).

If the composite material prepared from plastics and natural fibers is to be processed by extrusion, a lubricant is normally added to aid in passage of the composite material from the die. An improperly lubricated system will cause the composite to extrude at differing rates. This can result in various unacceptable physical defects in the composite, ranging from a scaly sharkskin appearance to saw-toothed edge tears.

A commonly used lubricant system is a blend of zinc stearate, with an N,N'-ethylene bis-stearamide (EBS) wax. Other lubricants include calcium stearate, magnesium stearate, non-metallic stearates; paraffin wax, polyester wax, polypropylene wax, fatty acid derived bis-amides, ethylene bis-oleamide, esters such as stearyl stearate, distearyl phthalate, pentaerythritol adipate stearate, ethylene glycol distearate, pentaerythritol tetrastearate, glycerol tristearate, polyethylene glycol 400 monostearate, glycerol monooleate, glycerol distearate, and blended complex modified fatty acid esters.

Unfortunately, it has been found that the commonly used zinc stearate-EBS lubricant system interferes with coupling agents. It has been suggested that the zinc stearate is responsible for the interference with maleic anhydride grafted olefin coupling agents. The stearate ring opens and esterifies the anhydride group, while the zinc complexes the resulting carboxylate. The coupling agent then provides significantly less improvement to the physical properties of the composite material prepared from plastics and natural fibers than expected.

Some commercial composite materials prepared from plastics and natural fibers use a zinc stearate/ethylene bis-stearamide lubricant system without any coupling agent. These formulations extrude quite readily, and provide product of excellent appearance. The physical properties of these composites are deficient compared to those of natural wood.

U.S. Patent No. 4,791,020 discloses composites made from cellulose fibers dispersed in a matrix of polyethylene and an isocyanate and bonded thereto during subsequent extrusion and or molding. The isocyanate is said to improve adhesion between the cellulose fibers and the polyethylene, which results in improved tensile properties in the composite.

U.S. Patent No. 5,326,513 discloses a process and device for the manufacture of plastic fiber boards made of balls of expanded glass, expanded clay, pumice granules, mica, or a similar material and a foamed organic binder, such as epoxy resin, PU phenol resin, or the like. The binder is mixed with the balls, foamed, and hardened in a matrix space formed between two mold plates (1, 2) positioned at a distance one from the other. In order to obtain a particularly light but stable plastic fiber board, uniformly distributed recesses opening toward the internal sides of the plates are provided to contain the mixture located between the two mold plates during compression and before hardening. The device employed to implement the process includes two mold plates (1, 2), which are brought together in a press to compact the introduced therebetween. The inner surface of each mold plate (1, 2) is provided with a plurality of uniformly distributed, conical mold bodies (4, 5), whose cross-sections running parallel to the mold plate surface decreases in the direction of the other mold plate.

U.S. Patent No. 5,516,472 discloses an apparatus and process for combining an organic fibrous material with a thermoplastic material forming a wood-imitating composite. The mixed material is extruded into a die system comprising a transition die, a stranding die and a molding die. The flow rate of the material through the die system is equalized by preforming the mixed material with the transition die to a shape approaching the end product, stranding the material with the stranding die to form individual strands, and compressing the individual strands with the molding die after it exits the stranding die. The die system may also include an adapter die positioned between the extruder and the transition die which functions to control the amount of mixed material which enters the die system. A product comprised of recyclables shredded and mixed to form a wood-imitating composite from a low-temperature extruder is also provided.

U.S. Patent No. 6,265,037 discloses an improved composite structural member comprising a complex profile structural member, made of a composite comprising a polypropylene polymer and a wood fiber. The material is useful in conventional construction applications. The complex profile, in the form of an extruded thermoplastic composite member can be used in residential and commercial structures as described. Preferably, the structural member is used in the manufacture of the fenestration components such as windows and doors. Such linear members are designed with specifically configured cross-sectional shapes to form structural elements in the fenestration units: Structural elements must possess sufficient strength, thermal stability and weatherability to permit the manufacture of a structurally sound window unit that can be easily installed into a rough opening but can maintain its attractive appearance and structural integrity over the life of the window unit often twenty years or more. The structural member comprises a hollow complex cross-section with at least one structural web or one fastener web formed within the component. The exterior of the extruded component has a visible capstock layer and is shaped and adapted for installation in rough openings. The exterior also contains shape and components capable of supporting the elements of the fenestration unit such as a window, sash or movable door unit. The improved polypropylene structural members have unique advantages and can be assembled in thermoplastic weld processes.

U.S. Patent No. 6,344,504 discloses an extruded wood simulative material which includes a high degree of cellulosic material content and begins with powdered thermoplastic material.

U.S. Patent No. 6,498,205 discloses an extrudable wood composite which includes cellulosic material and a powdered thermoplastic material.

U.S. Patent No. 6,632,863 discloses a cellulose/polyolefin pellet comprising polyolefin material and cellulosic material. The pellet may be concentrated such that it contains less than about 20% by weight of the polyolefin material and at least about 55% by weight of the cellulosic material. The pellet may be shipped to a remote manufacturing location where it may be blended with additional polyolefin material to make a synthetic wood component.

U.S. Patent No. 6,682,789 discloses a member comprising a complex profile made of a composite comprising a polypropylene polymer, and a wood fiber. The composite is useful in construction applications. The profile can be used in residential and commercial structures. The member is used in fenestration components such as windows and doors. The members possess strength, thermal stability and weatherability. The member comprises a complex cross-section with at least one structural web or one fastener web. The exterior can contain a cap-stock and is shaped for use in a fenestration unit such as a window, sash or movable door unit. The members can be assembled in thermal welding processes.

U.S. Patent No. 7,151,125 discloses an extrudable compound, an extrusion method using a polymer, a cellulosic fiber, and at least one lubricant selected from the group consisting of ethoxylated esters of hydantoins, ethoxylated esters of sorbitol and sorbitan, and ethylene bisamides made from fatty acids containing 6-10 carbons and composites manufactured through such processes which simulate conventional wood products. Another embodiment of the invention is directed to a composition containing polymer, a cellulosic fiber from an agricultural waste product and a lubricant containing a mixture of an alkylene bisamide derived from a C₁₀-C₁₈ fatty acid and an alkaline earth salt of a fatty acid.

U.S. Patent Application No. 2001/0051243 discloses an improved composite structural member comprising a complex profile structural member, made of a composite comprising a polypropylene polymer and a wood fiber. The material is useful in conventional construction applications. The complex profile, in the form of an extruded thermoplastic composite member can be used in residential and commercial structures as described. Preferably, the structural member is used in the manufacture of the fenestration components such as windows and doors. Such linear members are designed with specifically configured cross-sectional shapes to form structural elements in the fenestration units. Structural elements must possess sufficient strength, thermal stability and weatherability to permit the manufacture of a structurally sound window unit that can be easily installed into a rough opening but can maintain its attractive appearance and structural integrity over the life of the window unit often twenty years or more. The structural member comprises a hollow complex cross-section with at least one structural web or one fastener web formed within the component. The exterior of the extruded component has a visible capstock layer and is shaped and adapted for installation in rough openings. The exterior also contains shape and components capable of supporting the elements of the fenestration unit such as a window, sash or movable door unit. The improved polypropylene structural members have unique advantages and can be assembled in thermoplastic weld processes.

Japanese Patent JP 08239535 A2 teaches the use of one or more bis-amides or dialkylcarboxylic acid amides in the production of PVC-wood composites.

Japanese Patent JP 08302129 A2 teaches the use of one or more amides or bis-amides in the production of thermally foamed PVC-wood composites.

The disclosures of the foregoing are incorporated herein by reference in their entirety.

### SUMMARY OF THE INVENTION

The known art implies that the removal of metal stearates from composite formulations would be desirable, but does not teach that this can be accomplished while retaining the familiar, inexpensive, and widely used ethylene bis-stearamide in the formulation.

The present invention relates to a composition that aids in the processing and manufacture of cellulosic-thermoplastic composite. This composition is an unexpected and synergistic combination of a fatty acid bis-amide (a) of the structure: 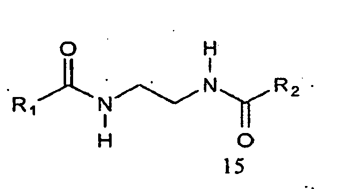 wherein R₁ and R₂ are independently saturated hydrocarbyl groups comprising from about 11 to about 35 carbon atoms, preferably in a ratio of from about 1:19 to about 9:1, with a fatty am ide (b) of the structure: 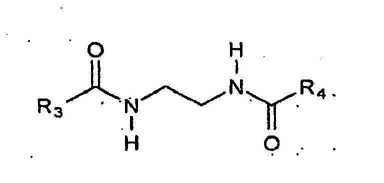 wherein R₃ and R₄ are independently unsaturated hydrocarbyl groups comprising from about 11 to about 35 carbon atoms; a cellulosic particulate (c); a thermoplastic (d); and a coupling agent (e) for coupling cellulosic particulate (c) to the thermoplastic (d). This combination perm its extrusion of composites at rates that are superior to those obtained with metal stearate/ethylene bis-stearamide, while offering substantial improvement in mechanical properties, such as flex strength and water uptake.

The present invention also relates to a method of extruding the combination of saturated fatty acid bis-amide (a), unsaturated bis-amide (b), cellulosic particulate (c), thermoplastic (d) and coupling agent (e) through an extruder to provide cellulosic-thermoplastic composite.

More particularly, the present invention is directed to a composition comprising:
(a) at least one saturated-fatty acid bis-amide of the structure: 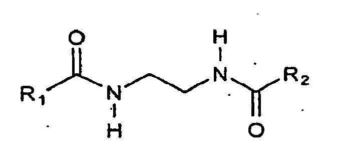 wherein R₁ and R₂ are independently saturated hydrocarbyl groups comprising from 11 to 35 carbon atoms,
(b) at least one unsaturated-fatty acid bis-amide of the structure: 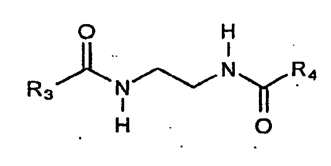 wherein R₃ and R₄ are independently unsaturated hydrocarbyl groups comprising from about 11 to about 35 carbon atoms;
(c) at least one particulate cellulosic material;
(d) at least one thermoplastic resin;
(e) at least one coupling agent for coupling the particulate cellulosic material (c) to the thermoplastic resin (d);
(f) optionally, at least one inorganic particulate material; and
(g) optionally, other lubricants can also be added, such as but not limited to polyethylene waxes, paraffin waxes, alkali metal carboxylates such as sodium stearate, potassium stearate, alone or in combination.

In another aspect, the present invention is directed to a method for forming a composition comprising
(i) combining
   (a) at least one saturated-fatty acid bis-amide of the structure: 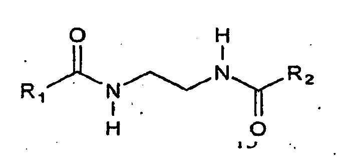 wherein R₁ and R₂ are independently saturated hydrocarbyl groups comprising from 11 to 35 carbon atoms,
   (b) at least one unsaturated-fatty acid bis-amide of the structure: 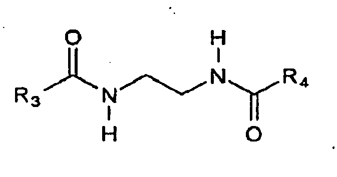 wherein R₃ and R₄ are independently unsaturated hydrocarbyl groups comprising from about 11 to about 35 carbon atoms;
   (c) at least one particulate cellulosic material;
   (d) at least one thermoplastic resin;
   (e) at least one coupling agent for coupling the particulate cellulosic material (c) to the thermoplastic resin (d);
   (f) optionally, at least one inorganic particulate material; and
   (g) optionally, other lubricants can also be added, such as but not limited to polyethylene waxes, paraffin waxes, alkali metal carboxylates such as sodium stearate, potassium stearate alone or in combination
      and,
(ii) extruding the combination of step (i) through an extruder to provide cellulosic-thermoplastic composite.

In still another aspect, the present invention is directed to an article fabricated from the above-described composition, wherein the article is selected from the group consisting of a solid or hollow cellulosic-thermoplastic composite profile, board, rod, strand, pellet, siding, sheet, and combinations thereof.

It is preferred that the alkyl groups R₁ and R₂ in the above saturated bis-amides are linear saturated hydrocarbyl groups, and that the alkyl groups R₃ and R₄ in the above unsaturated bis-amides are linear unsaturated hydrocarbyl groups.

### DESCRIPTION OF THE PREFERRED EMBODIMENT(S)

It is most desirable to be able to use a coupling agent in the formulation of cellulosic-thermoplastic composites. Coupling agents can provide significant improvements in the physical properties of cellulosic-thermoplastic composites, but increased difficulty is encountered in extruding cellulosic-thermoplastic composites containing a coupling agent, which requires the use of additional lubricant. Additional lubricant can significantly reduce the expected improvements in physical properties.

In accordance with the present invention, it has now been found that the use of coupling agent in combination with (a) a saturated-fatty acid bis-amide and (b) an unsaturated-fatty acid bis-amide, in an (a) to (b) ratio of from about 1:19 to about 9:1, overcomes these processing issues, permitting a cellulosic-thermoplastic composite of fully satisfactory appearance to be extruded at a faster rate than that obtained with a comparative formulation containing zinc stearate/ethylene bis-stearamide and no coupling agent, while offering improved mechanical properties, such as increased flex strength and resistance to water uptake.

The combination of saturated-fatty acid bis-amide (a) with unsaturated-fatty acid bis-amide (b) acts as a lubricant that does not impair the functioning of coupling agent (e), which is also present. As described above, in the saturated-fatty acid bis-amide (a) structure, R₁ and R₂ are independently selected saturated hydrocarbyl groups comprising from 11 to 35 carbon atoms. Preferably, R₁ and R₂ are independently selected saturated linear hydrocarbyl groups comprising from 15 to 22 carbon atoms. Examples of fatty acid bis-amides (a) that can be employed in the practice of the present invention include, but are not limited to, N,N'-ethylene bis-palmitamide, N,N'-ethylene bis-stearamide (EBS), N,N'-ethylene bis-arachidamide, N,N'-ethylene bis-behenamide, and the like, and combinations thereof. In the unsaturated-fatty acid bis-amide (b) structure, R₃ and R₄ are independently selected saturated linear hydrocarbyl groups, comprising from 11 to 35 carbon atoms. Preferably, R₃ and R₄ are independently selected saturated linear hydrocarbyl groups comprising from 15 to 22 carbon atoms. Examples of unsaturated-fatty acid bis-amides (b) that can be employed in the practice of the present invention include, but are not limited to, N,N'-ethylene bis-palmitoleamide, N,N'-ethylene bis-oleamide (EBO), N,N'-ethylene bis-elaidamide, N,N'-ethylene bis-gondamide, N,N'-ethylene bis-erucamide, N,N'-ethylene, bis-brassidamide, and the like, and combinations thereof.

The composition can optionally contain other lubricants (g), such as but not limited to, polyethylene waxes or paraffin waxes. Commercially available examples of such lubricants include but are not limited to A-C^{®} series polyethylene waxes (Honeywell). Other optional lubricants comprise alkali metal carboxylates such as sodium stearate, potassium stearate, or combinations thereof.

The composition can optionally contain an inorganic particulate material (f), which can be any inorganic particulate that can impart lubrication to the composition. The lubrication is such that it can facilitate the extrusion of cellulosic-thermoplastic composite at an equivalent rate compared to conventional zinc stearate/EBS lubricant compositions that are not used with coupling agent (e). Examples ofsuitable inorganic particulates (f) include, but are not limited to, pumice, alumina, diatomaceous earth, glass, silica, titanium oxide, iron oxide, zinc oxide, magnesium oxide, ceramic materials, calcium silicate hydrates, microspheres, perlite, zeolites, clay, kaolin, metakaolin, mica, calcium carbonate, polymeric resin emulsion, wollastonite, talc, titanium dioxide, barium sulfate, calcium sulfate, acrylics, vermiculite, microspheres, gypsum, calcium aluminate, magnesia, and the like, and combinations thereof. Pumice and talc are preferred inorganic particulates (f). The most preferred pumice product (f) is finely powdered pumice, for example, those produced by VitroCo (Vitrolite), Elkem (Sidistar), Hess, and combinations thereof. The most preferred talc products (f) are the platy, high purity talcs, for example, those sold as Silverline 002 and Silverline 403 by Luzenac America Corporation. Persons skilled in the art will understand that one or more inorganic particulates (f) can be used.

Cellulosic particulate materials (c) can be any known, conventional, or commercially used cellulosic particulate that can be used in cellulosic-thermoplastic composites. Examples of suitable cellulosic particulates (c) include, but are not limited to, wood fiber, wood particles, wood chips, ground wood, wood flour, wood flakes, wood veneers, wood laminates, saw dust, paper, newspaper, cardboard, straw, alfalfa, wheat pulp, cotton, corn stalks, corn cobs, rice hulls, rice bulbs, coconut shells, peanut shells, sugar cane bagasse, bamboo, palm fiber, hemp, flax, kenaf, plant fibers, vegetable fibers, rayon, grasses, wood pulp fiber, rice, rice fiber, esparto, esparto fiber, bast fiber, jute, jute fiber, flax fiber, cannabis, cannabis fiber, linen, linen fiber, ramie, ramie fiber, leaf fibers, abaca, abaca fiber, sisal, sisal fiber, chemical pulp, cotton fibers, straw fibers, grass fibers, oat, oat chaff, barley, barley chaff, walnut shells, grain seeds in the flour and cracked states, tubers, potatoes, roots, tapioca, tapioca root, cassava, cassava root, manioc, manioc root, sweet potato, arrowroot, sago palm pith, stems, husks, shells, fruits, recycled paper fiber, recycled boxes, recycled box fiber, recycled newspaper, recycled newspaper fiber, recycled computer printout, recycled computer printout fiber, milling tailings, hardwood fiber, softwood fiber, newsprint, ground newsprint, magazines, ground magazines, books, ground books, ground cardboard, wheat chaff, bamboo fiber, pond sludge, cork, and the like, and combinations thereof. Preferably, the cellulosic particulate material (c) is selected from the group consisting of wood fiber, wood flour, and combinations thereof. Persons skilled in the art will understand that one or more cellulosic particulates (c) can be used.

The thermoplastic resin (d) can be any polymer, but preferably is a polyolefin, more preferably polyethylene, polypropylene, copolymers of ethylene and propylene, copolymers of propylene with other alpha olefins, for example, butene, hexene, and octene, copolymers of polyethylene and vinyl acetate, and combinations thereof. Most preferably, thermoplastic resin (d) is selected from the group consisting of high-density polyethylene; low-density polyethylene, linear low-density polyethylene, polypropylene, copolymers of propylene with other alpha olefins , for example, butene, hexene, and octene, copolymers of ethylene and propylene, co-polyethylene-vinyl acetate, and combinations thereof.

As noted above, it is most desirable to be able to use a coupling agent (e) in the formulation of natural fiber-plastic composites. Coupling agents can provide significant improvements in the physical properties of cellulosic-thermoplastic composites. Improvements are most noticeable in the flex strength and resistance to water uptake of cellulosic-thermoplastic composite.

Improved flex strength is important, as natural wood has a much higher flex strength than the polymer matrix, and cellulosic-thermoplastic composites must have strength properties that are similar to natural wood if they are to be used in architectural applications. Improved water resistance correlates with resistance to rot, and so is also of utmost importance for products intended for exterior applications. Reductions in creep and LCTE improve the dimensional stability of cellulosic-thermoplastic composite, and therefore its suitability for architectural uses.

These improvements in physical properties are readily observed in molded test specimens. Increased difficulty is encountered in extruding cellulosic-thermoplastic composites comprising a coupling agent. This requires the use of additional lubricant, which as noted above, can significantly reduce expected improvements in physical properties.

Suitable coupling agents (e) include, but are not limited to; maleic anhydride grafted polyolefins, succinyl anhydride substituted polyolefins, acrylic acid grafted polyolefins, vinyl acetate grafted polyolefins, and the like, and combinations thereof. Preferably, coupling agent (e) is selected from the group consisting of maleic anhydride grafted high-density polyethylene, maleic anhydride grafted low-density polyethylene, maleic anhydride grafted linear low-density polyethylene, maleic anhydride grafted polyethylene wax, maleic anhydride grafted polypropylene, maleic anhydride grafted copolymers of propylene with other alpha olefins, for example butene, hexene, and octene, acrylic acid grafted high-density polyethylene, acrylic acid grafted low-density polyethylene, acrylic acid grafted polypropylene, acrylic acid grafted copolymers of propylene with other alpha olefins, for example butane, hexene, and octane, co-polyethylene-vinyl acetate, and combinations thereof. Commercially available examples of such coupling agents include but are not limited to: Polybond (Chemtura), Orevac and Lotader (Arkema), Licomont (Clariant), Epolene (Eastman), Integrate (Equistar), Exxelor (ExxonMobil), A-C Waxes and Optipak (Honeywell), Fusabond (E.I. DuPont de Nemours), and Bondyram (Polyram). These coupling agents can be produced by reactive extrusion processes in which the unfunctionalized polyolefin resin is reacted with maleic anhydride and an initiator to form the functionalized coupling agent during extrusion in a twin-screw extruder at elevated temperature.

In addition to the traditional reactive extrusion products, the coupling agent (e) can be a non-traditional anhydride-substituted polyolefin prepared by copolymerization of a cyclic anhydride with an olefin. An example of such a non-traditional anhydride substituted polyethylene is Fusabond WPC576 (E.I. DuPont de Nemours). Coupling agent (e) may also be a succinyl anhydride polyolefin prepared by solid phase batch reaction, An example of such a succinyl polyethylene is Scona, made by Kometra. Coupling agent (e) may also be prepared by reacting maleic anhydride with a polyolefin wax at elevated temperature. Examples of such coupling agents are the products manufactured by Clariant, Eastman, and Honeywell.

Coupling agent (e) most preferably is selected from the group consisting of maleic anhydride grafted ("maleated") high-density polyethylene (Polybond 3009, Polybond 3029, Polybond 3039), maleic anhydride grafted linear low-density polyethylene (Polybond 3109), maleic anhydride grafted polypropylene (Polybond 3000, Polybond 3200), acrylic acid grafted high-density polyethylene (Polybond 1009), acrylic acid grafted polypropylene (Polybond 1001, Polybond 1002), and combinations thereof; all are available from Chemtura Corporation.

The composition can also contain at least one additional component. Examples of suitable additional components include, but are not limited to, an antioxidant, a foaming agent, a dye, a pigment, a cross-linking agent, an inhibitor, and/or an accelerator. At least one further conventional additive may be used, such as compatibilizers, enhancers, mold-releasing agents, coating materials, humectants, plasticizers, sealing materials, thickening agents, diluting agents, binders, and/or any other commercially available or conventional components.

Antioxidants are added to prevent degradation of polymer during processing. An example is Chemtura Corporation's Naugard B25 (a mixture of tris (2,4-di-tert-butyl phenyl) phosphine arid tetrakis methylene (3,5-di-tert-butyl-4-hydroxyhydrocinnamate) methane). Foaming agent is added to decrease density of the cellulosic-thermoplastic composite by foaming. Examples of foaming agents include Chemtura Corporation's Celogen TSH (toluene sulfonyl hydrazide), Celogen AZ (azodicarbonamide), Celogen OT (*p-p*'-oxybis(benzenesulfonylhydrazide)), Celogen RA (*p*-toluene sulfonyl semicarbazide), Opex 80 (dinitrosopentamethylenetetramine), and Expandex 5-PT (5-phenyltetrazole).

Colorants are pigments or dyes. Dyes are commonly organic compounds that are soluble in plastic, forming a neutral molecular solution. They produce bright intense colors and are transparent. Pigments are generally insoluble in plastic. The color results from the dispersion of fine particles (in the range of about 0.01 to about 1 µm) throughout thermoptastic (d). They produce opacity or at least some translucence in the cellulosic-thermoplastic composite. Pigments can be organic or inorganic compounds and are viable in a variety of forms including dry powders, color concentrates, liquids, and precolor resin pellets. Most common inorganic pigments include oxides, sulfides, chromates, and other complexes based on a heavy metal such as cadmium, zinc, titanium, lead, molybdenum, iron, combinations thereof, and others. Ultramarines are typically sulfide-silicate complexes containing sodium and aluminum. Often pigments comprise mixtures of two, three or more oxides of iron, barium, titanium, antimony, nickel, chromium, lead, and others in known ratios. Titanium dioxide is a widely used and known bright white thermally stable inorganic pigment. Other known organic pigments include azo or diazo pigments, pyrazolone pigments, permanent red 2B, nickel azo yellow, litho red, and pigment scarlet.

Cross-linking agents can optionally be added to strengthen the bond between cellulosic particulate (c), as described above, into a final homogenous product. Cross-linking agent bonds across the pendent hydroxyl groups on the cellulose molecular chain. Cross-linking agents must have the characteristics of forming a strong bond at relatively low temperatures. Examples of cross-linking agents that can be used include polyurethanes such as isocyanate, phenolic resin, unsaturated polyester and epoxy resin and combinations thereof. Phenolic resin may be any single stage or two-stage resin, preferably with a low hexane content.

Inhibitors can be added to retard the speed of the cross-linking reaction. Examples of known inhibitors include organic acids, such as citric acid.

Accelerators can be added to increase the speed of the cross-linking reaction. Examples of accelerators include amine catalysts such as Dabco BDO (Air Products), and DEH40 (Dow Chemical).

The amounts of the various components of the composition can be adjusted by those skilled in the art depending on the specific materials being used and the intended use of the material.

In one embodiment, the present invention is directed to a composition comprising saturated-fatty acid bis-amide (a) present in an amount of from about 0.05 to about 7.2 weight percent, unsaturated-fatty acid bis-amide (b) present in an amount of from about 0.05 to about 7.6 weight percent, where the total of (a) and (b) is from about 1 to about 8 weight percent, and the ratio of (a) to (b) is from about 1:19 to about 9:1, cellulosic particulate (c) present in an amount of from about 10 to about 90 weight percent, thermoplastic (d) present in an amount of from about 90 to about 10 weight percent, coupling agent (e) present in an amount of from about 0.2 to about 10 weight percent, optionally, inorganic particulate (f) in an amount from about 0.25 to 10 weight percent, and , optionally, other lubricants (g) such as polyethylene wax, paraffin wax, sodium stearate, potassium stearate, alone or in combination, in an amount from 0 to about 1 weight percent.

In another embodiment, the present invention is directed to a composition comprising saturated-fatty acid bis-amide (a) present in an amount of from about 0.1 to about 6.4 weight percent, unsaturated-fatty acid bis-amide (b) present in an amount of from about 0.2 to about 7.2 weight percent, where the total of (a) and (b) is from about 1 to about 8 weight percent, and the ratio of (a) to (b) is from about 1:9 to about 4:1, cellulosic particulate (c) present in an amount of from about 20 to about 85 weight percent, thermoplastic (d) present in an amount of from about 80 to about 15 weight percent, coupling agent (e) selected from the group consisting of maleic anhydride grafted polyolefin coupling agents present in an amount of from about 0.2 to about 5 weight percent, and acrylic acid grafted polyolefin coupling agents present in an amount of from about I to about 7 weight percent, and combinations thereof, optionally, inorganic particulate (f) present in an amount of from about 0.25 to about 10 weight percent and, optionally, other lubricants (g) such as polyethylene wax, paraffin wax, sodium stearate, potassium stearate, alone or in combination, in an amount from 0 to about I weight percent.

In yet another embodiment, the present invention is directed to a composition comprising saturated-fatty acid bis-amide (a) present in an amount of from about 0.2 to about 4.0 weight percent, unsaturated-fatty acid bis-amide (b) present in an amount of from about 0.4 to about 4.5 weight percent, where the total of (a) and (b) is from about 2 to about 5 weight percent, and the ratio of (a) to (b) is from about 1:9 to about 4:1, cellulosic particulate (c) present in an amount of from about 40 to about 70 weight percent, polyolefin-based thermoplastic (d) present in an amount of from about 60 to about 30 weight percent, and coupling agent (e), which is a maleic anhydride grafted polyolefin coupling agent, present in an amount of from about 1.0 to about 3 weight percent, optionally, inorganic particulate (f) present in an amount of from about 0.5 to about 8 weight percent, and optionally, other lubricants (g) such as polyethylene wax, paraffin wax, sodium stearate, potassium stearate, alone or in combination, in an amount from 0 to about I weight percent.

In still another embodiment, the present invention is directed to a composition comprising saturated-fatty acid bis-amide (a) selected from the group consisting of N,N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting of N,N'-ethylene bis-palmitoleamide, N,N'-ethylene bis-oleamide, N,N'-ethylene bis-elaidamide, N,N'-ethylene bis-gondamide, N,N'-ethylene bis-erucamide, N,N'-methylene bis-brassidamide and combinations thereof, where saturated-fatty acid bis-amide (a) is present in an amount of from about 0.05 to about 4.5 weight percent, unsaturated-fatty acid bis-amide (b) present in an amount of from about 0.10 to about 4.8 weight percent, where the total of (a) and (b) is from about 1 to about 5 weight percent, and the ratio of (a) to (b) is from about 1:19 to about 9:1, cellulosic particulate (c) selected from the group consisting of wood flour, wood fiber and combinations thereof present in an amount of from about 10 to about 90 weight percent; thermoplastic (d) selected from the group consisting of high-density polyethylene, low-density polyethylene, linear low-density polyethylene, copolymers of ethylene and propylene, propylene, copolymers of propylene with other alpha olefins, for example, butene, hexene, and octene, copolymers of polyethylene and vinyl acetate and combinations thereof present in an amount of from about 90 to about 10 weight percent; and coupling agent (e), which is maleic anhydride grafted polyolefin selected from the group consisting of high-density polyethylene, low-density polyethylene, linear low-density polyethylene, copolymers of ethylene and propylene, propylene, copolymers of propylene with other alpha olefins, for example, butene, hexene, and octene, copolymers of polyethylene and vinyl acetate and combinations thereof, present in an amount of from about 0.2 to about 10 weight percent, optionally, inorganic particulate (f), which is finely powdered pumice, present in an amount of from about 0.25 to about 1.5 weight percent, and, optionally, other lubricants (g) such as polyethylene wax, paraffin wax, sodium stearate, potassium stearate, alone or in combination, in an amount from 0 to about 1 weight percent.

In yet another embodiment, the present invention is directed to a composition comprising saturated-fatty acid bis-amide (a) selected from the group consisting of N, N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting of N,N'-ethylene bis-palmitoleamide, N,N'-ethylene bis-oleamide, N,N'-ethylene bis-elaidamide, N,N'-ethylene bis-gondamide, N,N',-ethylene bis-erucamide, N,N'-ethylene bis-brassidamide and combinations thereof, where saturated-fatty acid bis-amide (a) is present in an amount of from about 0.05 to about 4.5 weight percent, unsaturated-fatty acid bis-amide (b) present in an amount of from about 0.10 to about 4.8 weight percent, where the total of (a) and (b) is from about 1 to about 5 weight percent, and the ratio of (a) to (b) is from about 1:19 to about 9:1, cellulosic particulate (c) selected from the group consisting of wood flour, wood fiber and combinations thereof present in an amount of from about 10 to about 90 weight percent; thermoplastic (d) selected from the group consisting of high-density polyethylene, low-density polyethylene, linear low-density polyethylene, copolymers of ethylene and propylene, propylene, copolymers of propylene with other alpha olefins , for example, butene, hexene, and octene, copolymers of polyethylene and vinyl acetate and combinations thereof present in an amount of from about 90 to about 10 weight percent; and coupling agent (e), which is maleic anhydride grafted polyolefin selected from the group consisting of high-density polyethylene, low-density polyethylene, linear low-density polyethylene, copolymers of ethylene and propylene, propylene, copolymers of propylene with other alpha olefins , for example, butene, hexene, and octene, copolymers of polyethylene and vinyl acetate and combinations thereof, present in an amount of from about 0.2 to about 10 weight percent, optionally, inorganic particulates (f), which are the platy, high purity talcs, for example, those sold as Silverline 002 and Silverline 403 by Luzenac America Corporation, present in an amount of from about 1 to about 10 weight percent, and, optionally, other lubricants (g) such as polyethylene wax, paraffin wax, sodium stearate, potassium stearate; alone or in combination, in an amount from 0 to about 1 weight percent.

In a preferred embodiment, the present invention is directed to a composition comprising saturated-fatty acid bis-amide (a) selected from the group consisting ofN,N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting ofN, N'-ethylene bis-palmitoleamide, N,N'-ethylene bis-oleamide, N,N'-ethylene bis-elaidamide, N,N'-ethylene bis-gondamide, N,N'-ethylene bis-erucamide, N,N'-ethylene bis-brassidamide, and combinations thereof where (a) is present in an amount of from about 0.1 to about 4.0 weight percent, unsaturated-fatty acid bis-amide (b) present in an amount of from about 0.10 to about 4.5 weight percent, where the total of (a) and (b) is from about 1 to about 5 weight percent, and the ratio of (a) to (b) is from about 1:9 to about 4:1, cellulosic particulate (c) selected from the group consisting of wood flour, wood fiber, and combinations thereof present in an amount of from about 20 to about 80 weight percent; thermoplastic (d) selected from the group consisting of high-density polyethylene, low-density polyethylene, linear low-density polyethylene, copolymers of ethylene and propylene, polypropylene, copolymers of propylene with other alpha olefins , for example, butene, hexene, and octene, copolymers of polyethylene and vinyl acetate and combinations thereof present in an amount of from about 80 to about 20 weight percent; and coupling agent (e), which is maleic anhydride grafted polyolefin selected from the group consisting of high-density polyethylene, low-density polyethylene, linear low-density polyethylene, copolymers of ethylene and propylene, polypropylene, copolymers of propylene with other alpha olefins , for example, butene, hexene, and octene, copolymers of polyethylene and vinyl acetate and combinations thereof, present in an amount of from about 0.5 to about 5 weight percent, optionally, inorganic particulate (f), which is finely powdered pumice, present in an amount of from about 0.25 to about 1.5 weight percent, and, optionally, other lubricants (g) such as polyethylene wax, paraffin wax, sodium stearate, potassium stearate, alone or in combination, in an amount from 0 to about 1 weight percent.

In another preferred embodiment, the present invention is directed to a composition comprising saturated-fatty acid bis-amide (a) selected from the group consisting ofN, N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting ofN, N'-ethylene bis-palmitoleamide, N,N'-ethylene bis-oleamide, N,N'-ethylene bis-elaidamide, N,N'-ethylene bis-gondamide, N,N'-ethylene bis-erucamide, N,N'-ethylene bis-brassidamide, and combinations thereof where (a) is present in an amount of from about 0.1 to about 4.0 weight percent, unsaturated-fatty acid bis-amide (b) present in an amount of from about 0.10 to about 4.5 weight percent, where the total of (a) and (b) is from about 1 to about 5 weight percent, and the ratio of (a) to (b) is from about 1:9 to about 4:1, cellulosic particulate (c) selected from the group consisting of wood flour, wood fiber, and combinations thereof present in an amount of from about 20 to about 80 weight percent; thermoplastic (d) selected from the group consisting of high-density polyethylene, low-density polyethylene, linear low-density polyethylene, copolymers of ethylene and propylene, polypropylene, copolymers of propylene with other alpha olefins , for example, butene, hexene, and octene, copolymers of polyethylene and vinyl acetate and combinations thereof present in an amount of from about 80 to about 20 weight percent; and coupling agent (e), which is maleic anhydride grafted polyolefin selected from the group consisting of high-density polyethylene, low-density polyethylene, linear low-density polyethylene, copolymers of ethylene and propylene, polypropylene, copolymers of propylene with other alpha olefins , for example, butene, hexene, and octene, copolymers of polyethylene and vinyl acetate and combinations thereof present in an amount of from about 0.5 to about 5 weight percent, optionally, inorganic particulates (f), which are the platy, high purity talcs, for example, those sold as Silverline 002 and Silverline 403 by Luzenac America Corporation, present in an amount of from about 1 to about 10 weight percent, and, optionally, other lubricants (g) such as polyethylene wax, paraffin wax, sodium stearate, potassium stearate, alone or in combination, in an amount from 0 to about 1 weight percent.

In a more preferred embodiment, the present invention is directed to a composition comprising saturated-fatty acid bis-amide (a) selected from the group consisting of N,N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting of N,N'-ethylene bis-palmitoleamide, N,N'-ethylene bis-oleamide, N,N'-ethylene bis-elaidamide, N,N'-ethylene bis-gondamide, N,N'-ethylene bis-erucamide, N,N'-ethylene bis-brassidamide, and combinations thereof where saturated-fatty acid bis-amide (a) is present in an amount of from about 0.1 to about 4.0 weight percent, unsaturated-fatty acid bis-amide (b) is present in an amount of from about 0.10 to about 4.5 weight percent, where the total of (a) and (b) is from about 1 to about 5 weight percent, and the ratio of (a) to (b) is from about 1:9 to about 4:1, cellulosic particulate (c) selected from the group consisting of wood flour, wood fiber, and combinations thereof present in an amount of from about 40 to about 70 weight percent; thermoplastic (d) selected from the group consisting of high-density polyethylene, low-density polyethylene, linear low-density polyethylene, copolymers of ethylene and propylene, polypropylene, copolymers of propylene with other alpha olefins, for example butene, hexene, and octene,copolymers of polyethylene and vinyl acetate, and combinations thereof present in an amount of from about 50 to about 30 weight percent; and coupling agent (e), which is anhydride-substituted polyolefin prepared by copolymerization of a cyclic anhydride with an olefin, present in an amount of from about 1.0 to about 3 weight percent, optionally, inorganic particulate (f), which is finely powdered pumice, present in an amount of from about 0.25 to about 1.5 weight percent, and, optionally, other lubricants (g) such as polyethylene wax, paraffin wax, sodium stearate, potassium stearate, alone or in combination, in an amount from 0 to about I weight percent.

In a more preferred embodiment, the present invention is directed to a composition comprising saturated-fatty acid bis-amide (a) selected from the group consisting of N,N'-ethylene bis-palmitamide, N,N'-ethylene bis-stearamide, N,N'-ethylene bis-arachidamide, and N,N'-ethylene bis-behenamide, unsaturated-fatty acid bis-amide (b) selected from the group consisting of N,N'-ethylene bis-palmitoleamide, N,N'-ethylene bis-oleamide, N,N'-ethylene bis-elaidamide, N,N'-ethylene bis-gondamide, N,N'-ethylene bis-erucamide, N,N'-ethylene bis-brassidamide, and combinations thereof where saturated-fatty acid bis-amide (a) is present in an amount of from about 0.1 to about 4.0 weight percent, unsaturated-fatty acid bis-amide (b) is present in an amount of from about 0.10 to about 4.5 weight percent, where the total of (a) and (b) is from about 1 to about 5 weight percent, and the ratio of (a) to (b) is from about 1:9 to about 4:1, cellulosic particulate (c) selected from the group consisting of wood flour, wood fiber, and combinations thereof present in an amount of from about 40 to about 70 weight percent; thermoplastic (d) selected from the group consisting of high-density polyethylene, low-density polyethylene, linear low-density polyethylene, copolymers of ethylene and propylene, polypropylene, copolymers of propylene with other alpha olefins, for example butene, hexene, and octene, copolymers of polyethylene and vinyl acetate, and combinations thereof present in an amount of from about 50 to about 30 weight percent; and coupling agent (e), which is anhydride-substituted polyolefin prepared by copolymerization of a cyclic anhydride with an olefin, present in an amount of from about 1.0 to about 3 weight percent, optionally, inorganic particulates (f), which are the platy, high purity talcs, for example, those sold as Silverline 002 and Silverline 403 by Luzenac America Corporation, present in an amount of from about 1 to about 10 weight percent, and, optionally, other lubricants (g) such as polyethylene wax, paraffin wax, sodium stearate, potassium stearate, alone or in combination, in an amount from 0 to about I weight percent.

The most preferred embodiment of the present invention is directed to a composition comprising saturated-fatty acid bis-amide (a), which is ethylene bis-stearamide, and is present in an amount of about 0.22 to about 4.0 weight percent; unsaturated-fatty acid bis-amide (b), which is ethylene bis-oleamide, and is present in an amount of about 0.8 to about 4.5 weigh percent; where the total of (a) and (b) is from about 2 to about 5 weight percent, and the ratio of (a) to (b) is from about 1:8 to about 4:1; cellulosic particulate (c), which is 20-100 mesh soft or hard wood flour, present in an amount of about 45 to about 65 weight percent, thermoplastic (d), which is high density polyethylene, present in an amount of about 40 to about 31 weight percent; and coupling agent (e), which is maleic anhydride grafted high-density polyethylene, present in an amount of about 1.5 to about 2.5 weight percent or ethylene-succinyl anhydride copolymer present in an amount of about 0.5 to about 2.0 weight percent, optionally, inorganic particulate (f), which is finely powdered pumice, present in an amount of from about 0.25 to about 1.5 weight percent, and optionally, other lubricants (g) such as polyethylene wax, paraffin wax, sodium stearate, potassium stearate, alone or in combination, in an amount from 0 to about I weight percent.

Another most preferred embodiment of the present invention is directed to a composition comprising saturated-fatty acid bis-amide (a), which is ethylene bis-stearamide, and is present in an amount of about 0.22 to about 4.0 weight percent; unsaturated-fatty acid bis-amide (b), which ethylene bis-oleamide, and is present in an amount of about 0.8 to about 4.5 weight percent; where the total of (a) and (b) is from about 2 to about 5 weight percent, and the ratio of (a) to (b) is from about 1:8 to about 4:1; cellulosic particulate (c), which is 20-100 mesh soft or hard wood flour, present in an amount of about 45 to about 65 weight percent, thermoplastic (d), which is high density polyethylene, present in an amount of about 40 to about 31 weight percent; and coupling agent (e), which is maleic anhydride grafted high-density polyethylene, present in an amount of about 1.5 to about 2.5 weight percent or ethylene-succinyl anhydride copolymer present in an amount of about 0.5 to about 2.0 weight percent, optionally, inorganic particulate (f), which are the platy, high purity talcs, for example, those sold as Silverline 002 and Silverline 403 by Luzenac America Corporation, present in an amount of from about 1 to about 10 weight percent, and optionally, other lubricants (g) such as polyethylene wax, paraffin wax, sodium stearate, potassium stearate, alone or in combination, in an amount from 0 to about 1 weight percent.

The composition of the present invention can be used to make an article. The article can be a solid or hollow cellulosic-thermoplastic composite profile, board, rod, strand, pellet, siding, sheet, or the like, or a combination thereof.

The composition can be compounded and blended by any standard means as will be apparent to one skilled in the art. In one method, the combination of saturated-fatty acid bis-amide (a), unsaturated-fatty acid bis-amide (b), cellulosic particulate (c), thermoplastic (d), coupling agent (e), optional inorganic particulate (f) ), and optional additional lubricants (g) can be extruded through an extruder to provide a cellulosic-thermoplastic composite. The composition can be extruded at a temperature sufficient to melt the thermoplastic (d), and then extruded through a die to form the cellulosic-thermoplastic composite. The composition can be processed through an extruder at a temperature of from about 145°C to about 200°C.

There are numerous extrusion processes practiced by those skilled in the art. Practitioners frequently choose to pre-blend fiber and plastic, particularly wood and plastic, and extrude this mixture into pre-blend material, or purchase such pre-blend material from a supplier, and then feed this pre-blend material into the final product process. The composition herein may be used in such a two-pass process wherein cellulosic particulate (c) and thermoplastic (d) are combined in pre-blend material in comparable ratios. Some examples of comparable ratios of cellulosic particulate (c) to thermoplastic (d) can be from about 9:1 to about 1:9. Compositions comprising comparable ratios of from about 3:1 to about 1:3 are preferred. Pre-blend material of cellulosic particulate (c) and thermoplastic (d) can be in the form of mix, pellet, flake, chip, pastille, granules, and combinations thereof. Similarly, fatty acid bis-amides (a) and (b) and other lubricants (g), and inorganic particulate (f) can be combined in pre-blend material in comparable ratios. Pre-blend material of fatty acid bis-amides (a) and (b) and other lubricants (g), and inorganic particulate (f) can also be in the form of mix, pellet, flake, chip, pastille, granules, and combinations thereof.

The cellulosic-thermoplastic composites are useful in structural and decorative products for residential and commercial architecture, such as decking, railings, fences, posts, trim, siding, shingles and the like. They can also be used for the production of articles in automotive applications, such as knobs, handles, interior fascia, sound-deadening panels, and carpet backings. Articles prepared from the cellulosic-thermoplastic composites comprising the above-described compositions have improved performance, such as improved flex strength and improved resistance to water uptake over commonly used natural fiber-plastic composites.

As will be seen in the examples, when N,N'-ethylene bis-stearamide (EBS) and N, N'-ethylene bis-oleamide (EBO) are used in conjunction with coupling agent (e) in cellulosic-thermoplastic composite, an improvement in flex strength over a zinc stearate/EBS system is observed. Furthermore, a reduction in 24-hour water uptake is also observed, as well as an improved output rate.

### EXAMPLES

Test formulations were prepared using American Wood Fibers 4020 pine wood flour (40 mesh). The wood was dried in a circulating oven at 121°C for 24 hours. The resulting moisture content was less than 1%. Thermoplastic resin (d) was BP Solvay (now INEOS) B54-60 fractional-melt high-density polyethylene flake (0.5 g/10 min Melt Flow), used as received. Chemtura Polybond 3039 maleic anhydride grafted HDPE coupling agent (1.5% succinyl anhydride, Melt Flow Rating = 4 g/10 min, 190°C, 2.16 kg with the physical form of a non-dusting micropellet of particle size between 425 and 850 microns), Naugard B-25 antioxidant, Lubrazinc W (zinc stearate) lubricant, Kemamide EBS (ethylene bis-stearamide), and Kemamide W-20 (EBO) were all used as received. VitroCo VitroliteXP powdered pumice was used as received.

All samples were extruded using a Brabender Intelli-Torque Plasti-Corder with a counter-rotating #403 conical twin-screw configuration, and a Brabender 7150 drive unit. Zone temperatures were set at: Zone 1 (150°C), Zone 2 (160°C), Zone 3 (160°C), Zone 4 (die) (150°C). The die produces a continuous flat test specimen 1.0 inch wide and 0.080 inch thick. Data were acquired using the Brabender Measuring Extruder Basic Program with Multiple Evaluation, Version 3.2.1. Compounded formulations were fed into the extruder from a K-Tron K2VT20 volumetric feeder. Specimens were extruded at 60 rpm and 80 rpm.

The maleic anhydride content of the coupling agent was determined by dissolving it in boiling toluene and titrating to a Bromothymol Blue end point using a standard 0.03N methanolic KOH solution. The KOH titrant was standardized using benzoic acid. The number of milliequivalents of KOH titrant needed to neutralize one hundred grams of coupling agent was determined. The percent maleic anhydride in the coupling agent was then calculated assuming one mole of KOH neutralized one mole of maleic anhydride. This assumption was confirmed by titration of straight maleic anhydride under the same conditions that the coupling agents were tested under. The number of millimoles of functionality per 100 grams of coupling agent was calculated by dividing the percent maleic anhydride by the molecular weight of the chemical, which was 98 grams per mole (g/mol) and multiplying by 1000.

The Melt Flow Rating of the coupling agent was determined using a Tinius Olsen Extrusion Plastometer Model MP600 following the procedures outlined in ASTM D1238.

A modified ASTM D790 test procedure was used to generate the flexural strength and flexural modulus data. In this modified procedure, a cross-head speed of 0.5 inch per minute (in/min) was used instead of the standard 0.05 inch per minute for Examples in Tables I through 6. The standard cross-head speed of 0.05 inch per minute was used for Examples in Tables 7 through 10.

Water uptake was determined by immersing a 1.0-inch by 2.0-inch strip of extrudate in tap water for 24 hours at room temperature and measuring the weight gain.

Test formulations are presented in Tables 1, 3, 5, 7, and 9 Output and test data are presented in Tables 2, 4, 6, 8, and 10. Number codes designate inventive samples while letter codes denote comparative samples.

**Table 1**

| Inventive Examples: | 1 | 2 | 3 | 4 | 5 |
|---|---|---|---|---|---|
| 4020 Wood Flour | 60 | 60 | 60 | 60 | 60 |
| Naugard B-25 | 0.1 | 0.1 | 0.1 | 0.1 | 0.1 |
| Polybond X41C9 | 2 | 2 | 2 | 2 | 2 |
| Kemamide EBS | 0.375 | 0.75 | 1.125 | 1.50 | 2.25 |
| Kemamidc W-20 | 2.625 | 2.25 | 1.875 | 1.50 | 0.75 |
| Vitrolite XP Pumice | 0.75 | 0.75 | 0.75 | 0.75 | 0.75 |
| HDPE B54-60 FLK (0.5 MF) | 34.15 | 34.15 | 34.15 | 34.15 | 34.15 |
| Total | 100 | 100 | 100 | 100 | 100 |
| | | | | | |
| Comparative Examples: | A | B | C | D | |
| 4020 Wood Flour | 60 | 60 | 60 | 60 | |
| Naugard B-25 | 0.1 | 0.1 | 0.1 | 0.1 | |
| Polybond X41C9 | 0 | 2 | 2 | 2 | |
| Zinc Stearate | 2 | 2 | | | |
| Kemamide EBS | 2 | 2 | | 3.00 | |
| Kemamide W-20 | | | 3.00 | | |
| Vitrolite XP Pumice | | | 0.75 | 0.75 | |
| HDPE B54-60 FLK (0.5 MF) | 34.90 | 35.90 | 34.15 | 34.15 | |
| Total | 100 | 100 | 100 | 100 | |

**Table 2**

| Inventive Examples: | rpm | 1 | 2 | 3 | 4 | 5 |
|---|---|---|---|---|---|---|
| Output (ft/min) | 60 | 3.08 | 3.02 | 2.47 | 2.18 | 2.45 |
| Flex Strength (MPa) | 60 | 33.2 | 35.1 | 37.1 | 35.8 | 44.8 |
| Flex Modulus (MPa) | 60 | 2388 | 2257 | 2302 | 2108 | 3321 |
| Specific Gravity | 60 | 1.006 | 1.010 | 1.006 | 1.024 | 1.094 |
| 24 Hour Water Uptake (%) | 60 | 7.22 | 6.36 | 6.06 | 5.65 | 5.76 |
| Output (ft/min) | 80 | 3.77 | 3.49 | 3.05 | 2.67 | 2.60 |
| | | | | | | |

| Comparative Examples: | rpm | A | B | C | D | |
|---|---|---|---|---|---|---|
| Output (ft/m in) | 60 | 1.86 | 2.01 | 2.65 | 2.06 | |
| Flex Strength (MPa) | 60 | 23.4 | 20.8 | 33.5 | 42.5 | |
| Flex Modulus (MPa) | 60 | 2957 | 2432 | 2506 | 2868 | |
| Specific Gravity | 60 | 1.016 | 1.065 | 1.028 | 1.067 | |
| 24 Hour Water Uptake (%) | 60 | 9.64 | 9.72 | 7.29 | 6.61 | |
| Output (ft/min) | 80 | | 2.47 | 3.43 | 2.41 | |

**Table 3**

| Inventive Examples: | 6 | 7 | 8 | 9 | 10 | 11 | 12 | 13 |
|---|---|---|---|---|---|---|---|---|
| 4020 Wood Flour | 60 | 60 | 60 | 60 | 60 | 60 | 60 | 60 |
| Naugard B-25 | 0.1 | 0.1 | 0.1 | 0.1 | 0.1 | 0.1 | 0.1 | 0.1 |
| Polybond 3039 | 2 | 2 | 2 | 2 | 2 | 2 | 2 | 2 |
| Kemamide EBS | 2.4 | 2.25 | 2.10 | 3.2 | 3.0 | 2.8 | 0.75 | 1.50 |
| Kemamide W-20 | 0.6 | 0.75 | 0.90 | 0.80, | 1.0 | 1.2 | 2.25 | 1.50 |
| Vitrolite XP pumice | 0.75 | 0.75 | 0.75 | 0.75 | 0.75 | 0.75 | 0.75 | 0.75 |
| HDPE B54-60 FLK (0.5 MF) | 34.15 | 34.15 | 34.15 | 33.15 | 33.15 | 33.15 | 34.15 | 34.15 |
| Total | 100 | 100 | 100 | 100 | 100 | 100 | 100 | 100 |
| | | | | | | | | |

| Comparative Examples: | A | B | E | F | | | | |
|---|---|---|---|---|---|---|---|---|
| 4020 Wood Flour | 60 | 60 | 60 | 60 | | | | |
| Naugard B-25 | 0.1 | 0.1 | 0.1 | 0.1 | | | | |
| Polybond 3039 | 0 | 2 | 0 | 0 | | | | |
| Zinc Stearate | 2 | 2 | 1.50 | 2.00 | | | | |
| Kemamide EBS | 2 | 2 | 1.50 | 2.00 | | | | |
| Vitrolite XP pumice | | | 0.75 | 0.75 | | | | |
| HDPE B54-60 FLK (0.5 MF) | 34.90 | 35.90 | 36.15 | 35.15 | | | | |
| Total | 100 | 100 | 100 | 100 | | | | |

**Table 4**

| **Inventive Examples:** | rpm | 6 | 7 | 8 | 9 | 10 | 11 | 12 | 13 |
|---|---|---|---|---|---|---|---|---|---|
| Output (ft/min) | 60 | 2.30 | 2.36 | 2.28 | 2.66 | 2.61 | 2.58 | 2.93 | 2.67 |
| Flex Strength (MPa) | 60 | 35.4 | 36.0 | 36.5 | 34.9 | 30.3 | 33.2 | 34.1 | 39.4 |
| Flex Modulus (MPa) | 60 | 2564 | 2554 | 2658 | 2744 | 2342 | 2608 | 3418 | 2932 |
| Specific Gravity | 60 | 1.049 | 1.065 | 1.069 | 1.042 | 1.037 | 1.053 | 1.059 | 1.083 |
| 24 hr Water Uptake (%) | 60 | 6.08 | 5.82 | 5.98 | 6.38 | 7.70 | 6.94 | 6.94 | 5.24 |
| Output (ft/min) | 80 | 2.68 | 2.50 | 2.60 | 3.05 | 2.83 | 2.97 | 3.57 | 3.11 |
| | | | | | | | | | |

| **Comparative Examples:** | rpm | A | B | E | F | | | | |
|---|---|---|---|---|---|---|---|---|---|
| Output (ft/min) | 60 | 1.86 | 2.01 | 2.16 | 2.32 | | | | |
| Flex Strength (MPa) | 60 | 23.4 | 20.8 | 25.3 | 23.2 | | | | |
| Flex Modulus (MPa) | 60 | 2957 | 2432 | 2858 | 2400 | | | | |
| Specific Gravity | 60 | 1.016 | 1.065 | 1.076 | 1.048 | | | | |
| 24 hr Water Uptake (%) | 60 | 9.64 | 9.72 | | | | | | |
| Output (f/min) | 80 | | 2.47 | 2.38 | 2.53 | | | | |

**Table 5**

| Inventive Examples: | 14 | 15 | 16 | 17 | 18 |
|---|---|---|---|---|---|
| 4020 Wood Flour | 60 | 60 | 60 | 60 | 60 |
| Naugard B-25 | 0.1 | 0.1 | 0.1 | 0.1 | 0.1 |
| Polybond 3039 | 2 | 2 | 2 | 2 | 2 |
| Kemamide EBS | 0.375 | 0.375 | 0.375 | 0.375 | 0.280 |
| Kemamide W-20 | 2.625 | 2.375 | 2.125 | 1.875 | 1.970 |
| A-C 617 A-polyethylene wax | - | 0.25 | 0.50 | 0.75 | 0.75 |
| Vitrolite XP pumice | 0.75 | 0.75 | 0.75 | 0.75 | 0.75 |
| HDPE B54-60 FLK (0.5MF) | 34.15 | 34.15 | 34.15 | 34.15 | 34.15 |
| Total | 100 | 100 | 100 | 100 | 100 |

**Table 6**

| Inventive Examples | rpm | 14 | 15 | 16 | 17 | 18 |
|---|---|---|---|---|---|---|
| Output (ft/min) | 60 | 2.24 | 2.23 | 2.29 | 2.19 | 2.25 |
| Flex Strength (MPa) | 60 | 38.08 | 43.60 | 45.76 | 45.21 | 48.31 |
| Flex Modulus (MPa) | 60 | 3279 | 3570 | 3804 | 3455 | 3562 |
| Specific Gravity | 60 | 1.076 | 1.1047 | 1.098 | 1.103 | 1.109 |
| 24 Hr. Water Uptake (%) | 60 | 5.03 | 4.36 | 3.74 | 4.15 | 3.95 |

**Table 7**

| Inventive Examples: | 19 | 20 |
|---|---|---|
| 4020 Wood Flour | 60 | 60 |
| Naugard B-25 | 0.1 | 0.1 |
| Polybond 3039 | 2 | 2 |
| Kemamide EBS | 2.25 | 2.062 |
| Kemamide W-20 | 0.75 | 0.688 |
| Sodium Stearate | - | 0.25 |
| Vitrolilte XP pumice | 0.75 | 0.75 |
| HDPE B54-60 FLK (0.5MF) | 34.15 | 34.15 |
| Total | 100 | 100 |
| | | |

| Comparative Examples: | G | H |
|---|---|---|
| 4020 Wood Flour | 60 | 60 |
| Naugard B-25 | 0.1 | 0.1 |
| Polybond 3039 | - | 2 |
| Zinc Stearate | 2 | 0.25 |
| Kemamide EBS | 2 | 2.062 |
| Kemamide W-20 | - | 0.688 |
| Sodium Stearate | - | - |
| Vitrolite XP pumice | 0.75 | 0.75 |
| HDPE B54-60 FLK (0.5 MF) | 35.15 | 34.15 |
| Total | 100 | 100 |

**Table 8**

| Inventive Examples | rpm | 19 | 20 |
|---|---|---|---|
| Output (ft/min) | 60 | 2.00 | 1.98 |
| Flex Strength (Mpa) | 60 | 29.57 | 32.21 |
| Flex Modulus (MPa) | 60 | 2177 | 2167 |
| Specific Gravity | 60 | 1.056 | 1.036 |
| 24 Hour Water Uptake (%) | 60 | 7.23 | 5.58 |
| | | | |

| Compartive Examples | rpm | G | H |
|---|---|---|---|
| Output (ft/min) | 60 | 2.35 | 2.26 |
| Flex Strength (Mpa) | 60 | 22.59 | 24.67 |
| Flex Modulus (MPa) | 60 | 2147 | 2403 |
| Specific Gravity | 60 | 1.056 | 1.094 |
| 24 Hour Water Uptake (%) | 60 | 7.73 | 7.15 |

**Table 9**

| Inventive Examples: | 21 | |
|---|---|---|
| 4020 Wood Flour | 55 | |
| Naugard B-25 | 0.1 | |
| Polybond 3039 | 2 | |
| Kemamide EBS | 3 | |
| Kemamide W-20 | 1 | |
| Talc - Silverline 002 | 5 | |
| HDPE B54-60 FLK (0.5 MF) | 35.9 | |
| Total | 100 | |
| | | |

| Compartive Examples: | I | J |
|---|---|---|
| 4020 Wood Flour | 55 | 55 |
| Naugard B-25 | 0.1 | 0.1 |
| Polybond 3039 | -- | -- |
| Zinc Stearate | 2 | -- |
| Kemamide EBS | 2 | 3 |
| Kemamide W-20 | -- | 1 |
| Talc - Silverline 002 | 5 | 5 |
| HDPE B54-60 FLK (0.5 MF) | 35.15 | 34.15 |
| Total | 100 | 100 |

**Table 10**

| Inventive Examples | rpm | 21 | |
|---|---|---|---|
| Output (ft/min) | 60 | 2.32 | |
| Flex Strength (Mpa) | 60 | 32.3 | |
| Flex Modulus (MPa) | 60 | 3350 | |
| Specific Gravity | 60 | 1.165 | |
| 24 Hour Water Uptake (%) | 60 | 7.38 | |
| | | | |

| Compartive Examples | rpm | I | J |
|---|---|---|---|
| Output (ft/min) | 60 | 2.81 | 2.54 |
| Flex Strength (Mpa) | 60 | 25.3 | 27.1 |
| Flex Modulus (MPa) | 60 | 2745 | 2607 |
| Specific Gravity | 60 | 1.114 | 1.130 |
| 24 Hour Water Uptake (%) | 60 | 9.59 | 9.57 |

## Claims

1. A composition comprising:
(a) at least one saturated-fatty acid bis-amide of the structure: 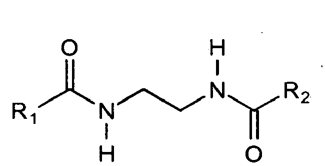 wherein R₁ and R₂ are independently saturated hydrocarbyl groups comprising from 11 to 35 carbon atoms,
(b) at least one unsaturated-fatty acid bis-amide of the structure. 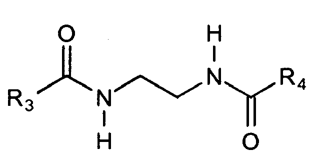 wherein R₃ and R₄ are independently unsaturated hydrocarbyl groups comprising from 11 to 35 carbon atoms;
(c) at least one particulate cellulosic material;
(d) at least one thermoplastic resin;
(e) at least one coupling agent for coupling the particulate cellulosic material (c) to the thermoplastic resin (d);
(f) optionally, at least one inorganic particulate material; and
(g) optionally, at least one additional lubricant.

2. The composition of claim 1 wherein the saturated-fatty acid bis-amide (a) is present in an amount of from 0.05 to 6.9 weight percent, the unsaturated-fatty acid bis-amide (b) is present in an amount of from 0.14 to 7.6 weight percent, the total of (a) and (b) is from 1 to 8 weight percent, and the ratio of (a) to (b) is from 1:19 to 6:1

3. The composition of claims 1-2 wherein the saturated-fatty acid bis-amide (a) is selected from the group consisting of N,N'-ethylene bis-palmitamide, N,N'-ethylene bis-stearamide, N,N'-ethylene bis-arachidamide, and N,N'-ethylene bis-behenamide.

4. The composition of claims 1-3 wherein the unsaturated-fatty acid bis-amide (b) is selected from the group consisting of N,N'-ethylene bis-palmitoleamide, N,N'-ethylene bis-oleamide (EBO), N,N'-ethylene bis-elaidamide, N,N'-ethylene bis-gondamide, N,N'-ethylene bis-erucamide, N,N'-ethylene bis-brassidamide, and combinations thereof.

5. The composition of claims 1-4 wherein the coupling agent is selected from the group consisting of maleic anhydride grafted polyolefins, succinyl anhydride substituted polyolefins, acrylic acid grafted polyolefins, vinyl acetate grafted polyolefins, and combinations thereof.

6. The composition of claims 1-4 wherein the coupling agent is selected from the group consisting of maleic anhydride grafted high-density polyethylene, maleic anhydride grafted low-density polyethylene, maleic anhydride grafted linear low-density polyethylene, maleic anhydride grafted polyethylene wax, maleic anhydride grafted polypropylene, acrylic acid grafted high-density polyethylene, acrylic acid grafted low-density polyethylene, acrylic acid grafted polypropylene, co-polyethylene-vinyl acetate, and combinations thereof.

7. An article of manufacture fabricated from the composition of claims 1-6 wherein said article is selected from the group consisting of a solid or hollow cellulosic-thermoplastic composite profile, board, rod, strand, pellet, siding, sheet, and combinations thereof.

8. A method for forming a composition comprising
(i) combining
(a) at least one saturated-fatty acid bis-amide of the structure: 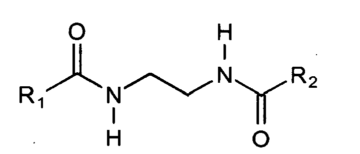 wherein R₁ and R₂ are independently saturated hydrocarbyl groups comprising from 11 to 35 carbon atoms,
(b) at least one unsaturated-fatty acid bis-amide of the structure: 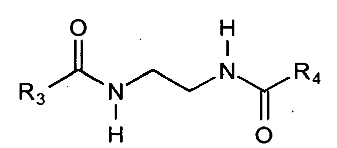 wherein R₃ and R₄ are indeperidently unsaturated hydrocarbyl groups comprising from 11 to 35 carbon atoms;
(c) at least one particulate cellulosic material;
(d) at least one thermoplastic resin;
(e) at least one coupling agent for coupling the particulate cellulosic material (c) to the thermoplastic resin (d);
(f) optionally, at least one inorganic particulate material; and
(g) optionally, at least one additional lubricant;
and,
(ii) extruding the combination of step (i) through an extruder to provide cellulosic-thermoplastic composite.

9. The method of claim 8 wherein the saturated-fatty acid bis-amide (a) is present in an amount of from 0.05 to 6.9 weight percent, the unsaturated-fatty acid bis-amide (b) is present in an amount of from 0.14 to 7.6 weight percent, the total of (a) and (b) is from 1 to 8 weight percent, and the ratio of (a) to (b) is from 1:19 to 6:1

10. The method of claims 8-9 wherein the saturated-fatty acid bis-amide (a) is selected from the group consisting of N,N'-ethylene bis-palmitamide, N,N'-ethylene bis-stearamide, N,N'-ethylene bis-arachidamide, and N,N'-ethylene bis-behenamide.

11. The method of claims 8-10 wherein the unsaturated-fatty acid bis-amide (b) is selected from the group consisting of N,N'-ethylene bis-palmitoleamide, N,N'-ethylene bis-oleamide (EBO), N,N'-ethylene bis-elaidamide, N,N'-ethylene bis-gondamide, N,N'-ethylene bis-erucamide, N,N'-ethylene bis-brassidamide, and combinations thereof.

12. The method of claims 8-11 wherein the coupling agent is selected from the group consisting of maleic anhydride grafted polyolefins, succinyl anhydride substituted polyolefins, acrylic acid grafted polyolefins, vinyl acetate grafted polyolefins, and combinations thereof.

13. The method of claims 8-11 wherein the coupling agent is selected from the group consisting of maleic anhydride grafted high-density polyethylene, maleic anhydride grafted low-density polyethylene, maleic anhydride grafted linear low-density polyethylene, maleic anhydride grafted polyethylene wax, maleic anhydride grafted polypropylene, acrylic acid grafted high-density polyethylene, acrylic acid grafted low-density polyethylene, acrylic acid grafted polypropylene, co-polyethylene-vinyl acetate, and combinations thereof.

## Patentansprüche

1. Eine Zusammensetzung enthaltend:
(a) mindestens ein Bisamid gesättigter Fettsäuren der Struktur: 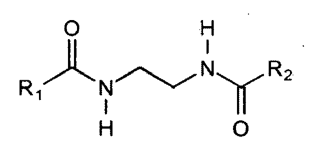 worin R₁ und R₂ unabhängig voneinander gesättigte Kohlenwasserstoffreste mit 11 bis 35 Kohlenstoffatomen sind,
(b) mindestens ein Bisamid ungesättigter Fettsäuren der Struktur: 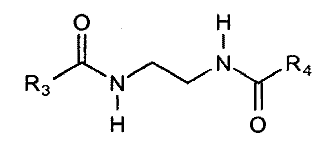 worin R₃ und R₄ unabhängig voneinander ungesättigte Kohlenwasserstoffreste mit 11 bis 35 Kohlenstoffatomen sind;
(c) mindestens ein partikelförmiges Zellulosematerial;
(d) mindestens ein thermoplastisches Harz;
(e) mindestens ein Kupplungsmittel zur Kupplung des partikelförmigen Zellulosematerials (c) an das thermoplastische Harz (d);
(f) wahlweise mindestens ein anorganisches partikelförmiges Material und
(g) wahlweise mindestens ein zusätzliches Schmiermittel.

2. Die Zusammensetzung des Anspruchs 1, worin das Bisamid gesättigter Fettsäuren (a) in einer Menge von 0,05 bis zu 6,9 Gewichtsprozent vorliegt, das Bisamid ungesättigter Fettsäuren (b) in einer Menge von 0,14 bis zu 7,6 Gewichtsprozent vorliegt, die Gesamtmenge von (a) und (b) von 1 bis zu 8 Gewichtsprozent beträgt und das Verhältnis von (a) zu (b) von 1:19 bis zu 6:1 beträgt.

3. Die Zusammensetzung der Ansprüche 1-2, worin das Bisamid gesättigter Fettsäuren (a) ausgewählt ist aus der Gruppe, bestehend aus N,N'-Ethylen-bis-palmitinsäureamid, N,N'-Ethylen-bis-stearinsäureamid, N,N'-Ethylen-bis-arachidinsäureamid und N,N'-Ethylen-bis-behensäureamid.

4. Die Zusammensetzung der Ansprüche 1-3, worin das Bisamid ungesättigter Fettsäuren (b) ausgewählt ist aus der Gruppe, bestehend aus N,N'-Ethylen-bis-palmitoleinsäureamid, N,N'-Ethylen-bis-oleinsäureamid (EBO), N,N'-Ethylen-bis-elaidinsäureamid, N,N'-Ethylen-bis-gondosäureamid, N,N'-Ethylen-bis-erucasäureamid, N,N'-Ethylen-bis-brassidinsäureamid und Kombinationen davon.

5. Die Zusammensetzung der Ansprüche 1-4, worin das Kupplungsmittel ausgewählt ist aus der Gruppe, bestehend aus Maleinsäureanhydrid-gepfropften Polyolefinen, Bernsteinsäureanhydrid-substituierten Polyolefinen, Acrylsäure-gepfropften Polyolefinen, Vinylacetat-gepfropften Polyolefinen und Kombinationen davon.

6. Die Zusammensetzung der Ansprüche 1-4, worin das Kupplungsmittel ausgewählt ist aus der Gruppe, bestehend aus Maleinsäureanhydrid-gepfropftem Polyethylen hoher Dichte, Maleinsäureanhydrid-gepfropftem Polyethylen niedriger Dichte, Maleinsäureanhydrid-gepfropftem linearem Polyethylen niedriger Dichte, Maleinsäureanhydrid-gepfropftem Polyethylenwachs, Maleinsäureanhydrid-gepfropftem Polypropylen, Acrylsäure-gepfropftem Polyethylen hoher Dichte, Acrylsäure-gepfropftem Polyethylen niedriger Dichte, Acrylsäure-gepfropftem Polypropylen, Co-polyethylen-vinylacetat und Kombinationen davon.

7. Ein Erzeugnis hergestellt aus der Zusammensetzung der Ansprüche 1-6, worin besagtes Erzeugnis ausgewählt ist aus der Gruppe, bestehend aus Massiv- oder Hohl-Zellulose-Thermoplast-Verbundstoff-Profil, -Platte, -Stange, -Draht, -Pellet, -Verkleidung, -Folie und Kombinationen davon.

8. Eine Methode zur Bildung einer Zusammensetzung enthaltend
(i) das Kombinieren von
(a) mindestens einem Bisamid gesättigter Fettsäuren der Struktur: 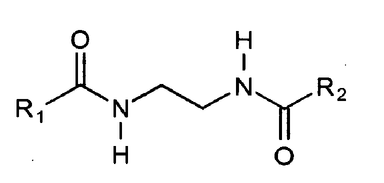 worin R₁ und R₂ unabhängig voneinander gesättigte Kohlenwasserstoffreste mit 11 bis 35 Kohlenstoffatomen sind,
(b) mindestens einem Bisamid ungesättigter Fettsäuren der Struktur: 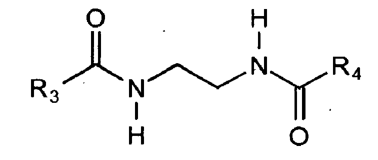 worin R₃ und R₄ unabhängig voneinander ungesättigte Kohlenwasserstoffreste mit 11 bis 35 Kohlenstoffatomen sind;
(c) mindestens einem partikelförmigen Zellulosematerial;
(d) mindestens einem thermoplastischen Harz;
(e) mindestens einem Kupplungsmittel zur Kupplung des partikelförmigen Zellulosematerials (c) an das thermoplastische Harz (d);
(f) wahlweise mindestens einem anorganischen partikelförmigen Material und
(g) wahlweise mindestens einem zusätzlichen Schmiermittel und
(ii) dem Extrudieren der Zusammensetzung von Schritt (i) durch einen Extruder, um Zellulose-Thermoplast-Verbundstoff bereitzustellen.

9. Die Methode des Anspruchs 8, worin das Bisamid gesättigter Fettsäuren (a) in einer Menge von 0,05 bis zu 6,9 Gewichtsprozent vorliegt, das Bisamid ungesättigter Fettsäuren (b) in einer Menge von 0,14 bis zu 7,6 Gewichtsprozent vorliegt, die Gesamtmenge von (a) und (b) von 1 bis zu 8 Gewichtsprozent beträgt und das Verhältnis von (a) zu (b) von 1:19 bis zu 6:1 beträgt.

10. Die Methode der Ansprüche 8-9, worin das Bisamid gesättigter Fettsäuren
(a) ausgewählt ist aus der Gruppe, bestehend aus N,N'-Ethylen-bis-palmitinsäureamid, N,N'-Ethylen-bis-stearinsäureamid, N,N'-Ethylen-bis-arachidinsäureamid und N,N'-Ethylen-bis-behensäureamid.

11. Die Methode der Ansprüche 8-10, worin das Bisamid ungesättigter Fettsäuren (b) ausgewählt ist aus der Gruppe, bestehend aus N,N'-Ethylen-bis-palmitoleinsäureamid, N,N'-Ethylen-bis-oleinsäureamid (EBO), N,N'-Ethylen-bis-elaidinsäureamid, N,N'-Ethylen-bis-gondosäureamid, N,N'-Ethylen-bis-erucasäureamid, N,N'-Ethylen-bis-brassidinsäureamid und Kombinationen davon.

12. Die Methode der Ansprüche 8-11, worin das Kupplungsmittel ausgewählt ist aus der Gruppe, bestehend aus Maleinsäureanhydrid-gepfropften Polyolefinen, Bernsteinsäureanhydrid-substituierten Polyolefinen, Acrylsäure-gepfropften Polyolefinen, Vinylacetat-gepfropften Polyolefinen und Kombinationen davon.

13. Die Methode der Ansprüche 8-11, worin das Kupplungsmittel ausgewählt ist aus der Gruppe, bestehend aus Maleinsäureanhydrid-gepfropftem Polyethylen hoher Dichte, Maleinsäureanhydrid- gepfropftem Polyethylen niedriger Dichte, Maleinsäureanhydrid-gepfropftem linearem Polyethylen niedriger Dichte, Maleinsäureanhydrid-gepfropftem Polyethylenwachs, Maleinsäureanhydrid-gepfropftem Polypropylen, Acrylsäure-gepfropftem Polyethylen hoher Dichte, Acrylsäure-gepfropftem Polyethylen niedriger Dichte, Acrylsäure-gepfropftem Polypropylen, Co-polyethylen-vinylacetat und Kombinationen davon.

## Revendications

1. - Composition comprenant :
(a) au moins un bis-amide d'acide gras saturé de la structure : 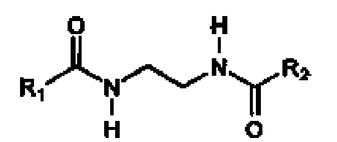 dans laquelle R₁ et R₂ sont indépendamment des groupes hydrocarbyle saturés comprenant de 11 à 35 atomes de carbone ;
(b) au moins un bis-amide d'acide gras insaturé de la structure : 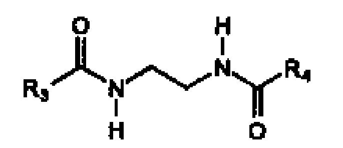 dans laquelle R₃ et R₄ sont indépendamment des groupes hydrocarbyle insaturés comprenant de 11 à 35 atomes de carbone ;
(c) au moins une matière cellulosique particulaire ;
(d) au moins une résine thermoplastique ;
(e) au moins un agent de couplage pour coupler la matière cellulosique particulaire (c) à la résine thermoplastique (d) ;
(f) facultativement, au moins une matière particulaire inorganique ; et
(g) facultativement, au moins un lubrifiant supplémentaire.

2. - Composition selon la revendication 1, dans laquelle le bis-amide d'acide gras saturé (a) est présent dans une quantité de 0,05 à 6,9 pour cent en poids, le bis-amide d'acide gras insaturé (b) est présent dans une quantité de 0,14 à 7,6 pour cent en poids, le total de (a) et (b) est de 1 à 8 pour cent en poids, et le rapport de (a) à (b) est de 1:19 à 6:1.

3. - Composition selon l'une des revendications 1 et 2, dans laquelle le bis-amide d'acide gras saturé (a) est choisi dans le groupe constitué par le N,N'-éthylène bis-palmitamide, le N,N'-éthylène bis-stéaramide, le N,N'-éthylène bis-arachidamide, et le N,N'-éthylène bis-behénamide.

4. - Composition selon l'une des revendications 1 à 3, dans laquelle le bis-amide d'acide gras insaturé (b) est choisi dans le groupe constitué par le N,N'-éthylène bis-palmitoléamide, le N,N'- éthylène bis-oléamide (EBO), le N,N'-éthylène bis-élaidamide, le N,N'-éthylène bis-gondamide, le N,N'-éthylène bis-érucamide, le N,N'-éthylène bis-brassidamide, et leurs combinaisons.

5. - Composition selon l'une des revendications 1 à 4, dans laquelle l'agent de couplage est choisi dans le groupe constitué par les polyoléfines greffées par anhydride maléique, les polyoléfines substituées par succinyl anhydride, les polyoléfines greffées par acide acrylique, les polyoléfines greffées par acétate de vinyle et leurs combinaisons.

6. - Composition selon l'une des revendications 1 à 4, dans laquelle l'agent de couplage est choisi dans le groupe constitué par le polyéthylène haute densité greffé par anhydride maléique, le polyéthylène basse densité greffé par anhydride maléique, le polyéthylène basse densité linéaire greffé par anhydride maléique, la cire de polyéthylène greffée par anhydride maléique, le polypropylène greffé par anhydride maléique, le polyéthylène haute densité greffé par acide acrylique, le polyéthylène basse densité greffé par acide acrylique, le polypropylène greffé par acide acrylique, le co-polyéthylène-acétate de vinyle, et leurs combinaisons.

7. - Article de fabrication fabriqué à partir de la composition telle que définie à l'une des revendications 1-6, dans lequel ledit article est choisi dans le groupe constitué par un profilé composite cellulosique-thermoplastique solide ou creux, une plaque, une tige, un cordon, une pastille, un bardage, une feuille et leurs combinaisons.

8. - Procédé de formation d'une composition comprenant les opérations consistant à :
(i) combiner :
(a) au moins un bis-amide d'acide gras saturé de la structure : 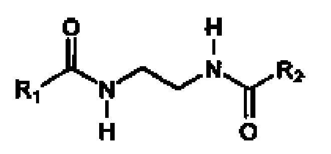 dans laquelle R₁ et R₂ sont indépendamment des groupes hydrocarbyle saturés comprenant de 11 à 35 atomes de carbone ;
(b) au moins un bis-amide d'acide gras insaturé de la structure : 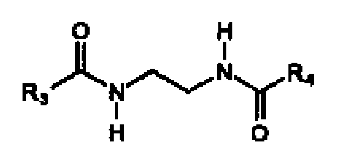 dans laquelle R₃ et R₄ sont indépendamment des groupes hydrocarbyle insaturés comprenant de 11 à 35 atomes de carbone ;
(c) au moins une matière cellulosique particulaire ;
(d) au moins une résine thermoplastique ;
(e) au moins un agent de couplage pour coupler la matière cellulosique particulaire (c) à la résine thermoplastique (d) ;
(f) facultativement, au moins une matière particulaire inorganique ; et
(g) facultativement, au moins un lubrifiant supplémentaire ; et
(ii) extruder la combinaison de l'étape (i) à travers une extrudeuse pour fournir un composite cellulosique-thermoplastique.

9. - Procédé selon la revendication 8, dans lequel le bis-amide d'acide gras saturé (a) est présent dans une quantité de 0,05 à 6,9 pour cent en poids, le bis-amide d'acide gras insaturé (b) est présent dans une quantité de 0,14 à 7,6 pour cent en poids, le total de (a) et (b) est de 1 à 8 pour cent en poids, et le rapport de (a) à (b) est de 1:19 à 6:1.

10. - Procédé selon l'une des revendications 8 et 9, dans lequel le bis-amide d'acide gras saturé (a) est choisi dans le groupe constitué par le N,N'-éthylène bis-palmitamide, le N,N'-éthylène bis-stéaramide, le N,N'-éthylène bis-arachidamide et le N,N'-éthylène bis-behénamide.

11. - Procédé selon l'une des revendications 8 à 10, dans lequel le bis-amide d'acide gras insaturé (b) est choisi dans le groupe constitué par le N,N'-éthylène bis-palmitoléamide, le N,N'-éthylène bis-oléamide (EBO), le N,N'-éthylène bis-élaidamide, le N,N'-éthylène bis-gondamide, le N,N'-éthylène bis-érucamide, le N,N'-éthylène bis-brassidamide et leurs combinaisons.

12. - Procédé selon l'une des revendications 8 à 11, dans lequel l'agent de couplage est choisi dans le groupe constitué par les polyoléfines greffées par anhydride maléique, les polyoléfines substituées par anhydride succinyl, les polyoléfines greffées par acide acrylique, les polyoléfines greffées par acétate de vinyle et leurs combinaisons.

13. - Procédé selon l'une des revendications 8 à 11, dans lequel l'agent de couplage est choisi dans le groupe constitué par le polyéthylène haute densité greffé par anhydride maléique, le polyéthylène basse densité greffé par anhydride maléique, le polyéthylène basse densité linéaire greffé par anhydride maléique, la cire de polyéthylène greffé par anhydride maléique, le polypropylène greffé par anhydride maléique, le polyéthylène haute densité greffé par acide acrylique, le polyéthylène basse densité greffé par acide acrylique, le polypropylène greffé par acide acrylique, le co-polyéthylène-acétate de vinyle et leurs combinaisons.
